# Europäisches Patentamt
# European Patent Office
# Office européen des brevets

(11) Veröffentlichungsnummer: **0 008 398**
**B2**

(12) **NEUE EUROPÄISCHE PATENTSCHRIFT**

(45) Veröffentlichungstag der neuen Patentschrift:
**06.04.88**

(21) Anmeldenummer: **79102822.8**

(22) Anmeldetag: **06.08.79**

(51) Int. Cl.⁴: **A 23 F 5/20**

(54) **Verfahren zum Entcoffeinieren von Rohkaffee.**

(30) Priorität: **22.08.78 CH 8891/78**

(43) Veröffentlichungstag der Anmeldung:
**05.03.80 Patentblatt 80/5**

(45) Bekanntmachung des Hinweises auf die Patenterteilung:
**19.05.82 Patentblatt 82/20**

(45) Bekanntmachung des Hinweises auf die Entscheidung
über den Einspruch:
**06.04.88 Patentblatt 88/14**

(84) Benannte Vertragsstaaten:
**BE DE FR GB IT LU NL SE**

(73) Patentinhaber: **C O F F E X AG, Rheinweg 21, CH-
8212 Neuhausen am Rheinfall Kanton
Schaffhausen (CH)**

(72) Erfinder: **Fischer, Arthur, Dr.- chem.,
Stiftsherrenstrasse 36, CH- 5013 Niedergösgen
Kanton Solothurn (CH)**
Erfinder: **Kummer, Peter, Dipl.- chem.,
Schaffhauserstrasse 234, CH- 8213 Neunkirch
Kanton Schaffhausen (CH)**

(74) Vertreter: **Bolte, Erich, Dipl.- Ing., c/o Meissner &
Bolte Patentanwälte Hollerallee 73, D-2800
Bremen (DE)**

(56) Entgegenhaltungen: (Fortsetzung)
**3082, 4342 und 5812
Monographie "Kaffe und Coffein" von Oskar
Eichler, Springer Verlag, 1976, Seiten 13/14 und 27
bis 29
Ullmanns Encyklopädie der technischen Chemie,
Band 13, 4. Auflage, 1977, Seiten 432, 433
Michael Sivetz et al, "Coffee Technology",
Ausgabe 1963, Seiten 164 bis 167
I.W. Hassler, "Activated Carbon", London 1967,
Seiten 102 und 103
Handbuch der Lebensmittelchemie, Bd. VI (1970),
Seiten 16, 22, 32, 36, 37 u. 39
Erich Ziegler, "Die natürlichen und künstlichen
Aromen", 1982
Hans Gerhard Maier, "Kaffee" (1981), Seiten 17 bis
20, 46 bis 49
Oskar Eichler, "Kaffee und Coffein" (1976), Seiten
11, 16, 17, 24, 25, 27, 28
Michael Sivetz, "Coffee Technology" (1979), Seiten
558, 559, 561, 563, 566**

(56) Entgegenhaltungen:
**CH-A-109 471
CH-A-153 468
DE-A-2 357 590
DE-A-2 548 916
DE-A-2 638 383
DE-A-2 641 146
DE-C-515 604
DE-C-553 800
DE-C-567 452
DE-C-685 367
DE-C-2 005 293
FR-A-698 118
FR-A-741 903
FR-A-779 451
FR-A-2 297 004
GB-A-1 488 340
US-A-2 198 859
US-A-2 309 092
US-A-4 044 162
Römpp's Chemie Lexikon, 5. Auflage, 1962, Seiten**

**EP 0 008 398 B2**

## Beschreibung

In praktisch allen heute verwendeten bekannten Verfahren zum Entcoffeinieren von Rohkaffee wird das Coffein mit organischen Lösungsmitteln extrahiert. Ein Hauptnachteil dieser Verfahren besteht darin, dass zumindest Spuren des Lösungsmittels im behandelten Kaffee zurückbleiben.

Um die Verwendung organischer Lösungsmittel zu vermeiden ist es auch bekannt, z. B. aus der französischen Patentschrift 779 451, den Rohkaffee mit einer wässrigen Flüssigkeit zu extrahieren, der Extraktlösung das Coffein durch Adsorption an einem Adsorptionsmittel zu entziehen und danach die übrigen extrahierten Rohkaffee-Inhaltsstoffe wieder mit den Kaffeebohnen zu vereinigen. Der Nachteil der bekannten Verfahren dieser Art besteht darin, dass das Adsorptionsmittel, insbesondere Aktivkohle, ausser dem Coffein auch noch andere Rohkaffee-Inhaltsstoffe in merklichen Mengen adsorbiert, die damit verloren gehen und im entcoffeinierten Kaffee fehlen, der daher einen zu geringen Gehalt an Inhaltsstoffen aufweist.

Die Aufgabe der Erfindung besteht darin, diesen Nachteil zu vermeiden.

Genstand der Erfindung ist ein Verfahren zum Entcoffeinieren von Rohkaffee, bei dem das Coffein mittels einer wässrigen Flüssigkeit extrahiert und aus der Flüssigkeit an einem Adsorptionsmittel adsorbiert wird, und welches dadurch gekennzeichnet ist, daß das Adsorptionsmittel mit mindestens einem wasserlöslichen Rohkaffee-Inhaltsstoff, der nicht aus der Flüssigkeit heraus an das Adsorptionsmittel gebunden werden soll, oder einem Stoff gleicher Molekülstruktur und -größe vorbeladen und der Beladungsgrad so eingestellt wird, daß zwischen Flüssigkeit und Adsorptionsmittel bezüglich des genannten Rohkaffee-Inhaltsstoffes bzw. der genannten Rohkaffee-Inhaltsstoffe mit Ausnahme des Coffeins Adsorptionsgleichgewicht herrscht und daß danach so gewonnener entcoffeinierter Extrakt eingeengt und wieder mit dem inzwischen getrockneten Rohkaffee vereinigt wird oder daß als wässrige Flüssigkeit entcoffeinierter Extrakt zum Extrahieren des Coffeins aus dem Rohkaffee verwendet wird, wobei in diesem Fall in dem coffeinfreien Extrakt die Konzentration an wasserlöslichen Rohkaffee-Inhaltsstoffen so hoch ist, daß aus dem Rohkaffee außer dem Coffein praktisch keine anderen wasserlöslichen Rohkaffee-Inhaltsstoffe herausgelöst werden.

Damit wird erreicht, dass beim Adsorbieren des Coffeins aus der wässrigen Flüssigkeit das Adsorptionsmittel die Konzentrationen der Rohkaffee-Inhaltsstoffe in dieser Flüssigkeit, mit Ausnahme des Coffeins, praktisch nicht verändert.

Verfahren zum Entcoffeinieren von Kaffee unter Verwendung eines vorbeladenen Adsorptionsmittels sind auch schon in den deutschen Patentschriften 553 800 und 567 452 beschrieben worden. Nach diesen Patentschriften wird ein Aufguss von geröstetem Kaffee mit Aktivkohle in Berührung gebracht, die zuvor mit Kohlenhydraten oder Glycerin behandelt worden ist. Damit sollte dem Nachteil begegnet werden, der darin besteht, dass die Aktivkohle dem Kaffeeaufguss normalerweise auch erhebliche Anteile an Aroma- und Extraktivstoffen entzieht. Bei der Verwendung der so vorbeladenen Aktivkohle geht der sehr leicht in Wasser lösliche Vorbeladungsstoff in den Kaffeeaufguss und reichert diesen an. Der Vorbeladungsstoff, z. B. Kohlenhydrat, ist jedoch eine Fremdsubstanz. die von Natur aus im gerösteten Kaffee nicht vorhanden ist. So wird also die natürliche Zusammensetzung des behandelten Kaffeeaufgusses verändert, indem diesem Aroma- und Extraktivstoffe entzogen werden und eine Fremdsubstanz zugesetzt wird.

Demgegenüber wird im Verfahren gemäss der vorliegenden Erfindung das Adsorptionsmittel für die Entcoffeinierung von Rohkaffee mit mindestens einem Rohkaffee-Inhaltsstoff wie angegeben bis zum Gleichgewicht vorbeladen. womit erreicht wird, dass das Adsorptionsmittel einerseits der wässrigen Extraktlösung wenigstens diesen Rohkaffee-Inhaltsstoff nicht entzieht, anderseits aber auch keine Stoffe oder gar Fremdsubstanzen an die Extraktlösung abgibt.

Nachstehend werden Einzelheiten bevorzugter Ausführungsformen des erfindungsgemässen Verfahrens beispielsweise näher erläutert.

Vorbehandlung des Adsorptionsmittels
Ein Adsorptionsmittel, insbesondere Aktivkohle, wird mit mindestens einem Rohkaffee-Inhaltsstoff, der im zu entcoffeinierenden Rohkaffee erhalten bleiben soll, oder mit einem Stoff der gleichen Molekülstruktur und -grösse beladen. Damit wird erreicht, dass die Aktivkohle später, wenn sie mit einer Kaffee-Extraktlösung in Berührung gebracht wird, aus dieser praktisch keine derartigen Inhaltsstoffe adsorbiert. Es wird also die Selektivität der Aktivkohle für Coffein erhöht. Die Beladung wird so stark gewählt, dass zwischen der Aktivkohle und wenigstens dem betreffenden Rohkaffee-Inhaltsstoff in der Lösung, aus der später Coffein an der Aktivkohle adsorbiert werden soll, dann schon im vornherein Gleichgewicht herrscht.

Die Wahl der Vorbeladungsstoffe richtet sich in der Regel auch nach wirtschaftlichen Gegebenheiten. Eine Beladung mit vollständigem coffeinfreiem Kaffee-Extrakt wäre zwar ideal, kommt aber aus Kostengründen kaum in Frage. Wesentliche Rohkaffee-Inhaltsstoffe, die von Aktivkohle in merklichem Ausmass adsorbiert werden, sind insbesonders verschiedene Zucker sowie Chlorogensäure. Um die Adsorptionswirkung der Aktivkohle für diese Stoffe zu verringem, kann sie mit Saccharose und/oder Glucose und/oder anderen Kohlenhydraten vorbeladen werden. Zusätzlich oder stattdessen würde sich auch Chlorogensäure eignen, die jedoch wesentlich teurer ist als etwa Rohrzucker.

Für das Vorbeladen kann zweckmässig eine wässrige Lösung der Vorbeladungsstoffe mit der Aktivkohle in Berührung gebracht werden. insbesondere kann man eine Lösung bestimmter Konzentration in einem heizbaren Tank vorlegen, auf eine bestimmte Temperatur erhitzen und dann aus dem Tank im Kreislauf durch eine Aktivkohle-Kolonne pumpen. Die Konzentration der Vorbeladungsstoffe in der Lösung wird wie schon angedeutet so eingestellt, dass bei der späteren Adsorption von Coffein aus einer Kaffee-Extraktlösung die Konzentrationen der Rohkaffee-Inhaltsstoffe in dieser Lösung, ausser derjenigen des Coffeins, möglichst in natürlicher Höhe erhalten bleiben. Die Temperatur der Vorbehandlungslösung kann 20-100°C betragen, vorzugsweise 70-90°C. Bei einer Kolonne, die etwa 500 kg Aktivkohle enthält, dauert diese Vorbehandlung bei einer Durchflussmenge von 5-25 m³/h, vorzugsweise 5-10 m³/h, in der Regel 2-10 Stunden, vorzugsweise 6-8 Stunden, Die Vorbehandlung kann aber auch ohne Umpumpen der Vorbehandlungslösung erfolgen, indem man die Aktivkohle mit der Lösung in einem auf die Temperatur aufgeheizten Behälter stehen lässt.

Auf die Qualität des fertigen entcoffeinierten Kaffees, insbesondere dessen Farbe, wirkt es sich günstig aus, wenn man die Aktivkohle auch noch mit Säure vorbehandelt. Säure kann zu der beschriebenen Lösung der Vorbeladungsstoffe hinzugefügt oder getrennt von diesen in einer gesonderten Lösung aufgebracht werden. Als Säure kommen alle für die Lebensmittelbehandlung zugelassenen Säuren in Frage, z. B. Essigsäure und/oder Salzsäure und/oder Ameisensäure usw. Vorzugsweise werden Säuren verwendet, die von Natur aus im Kaffee enthalten sind. Die Konzentration der Säure in der Lösung kann 0,5-3 % betragen.

Anschliessend an die Säurebehandlung wird die Aktivkohle mit Wasser gespült.

Adsorption des Coffeins

Grüner Kaffee wird mit Wasser oder einer wässrigen Flüssigkeit extrahiert, und aus der Flüssigkeit wird Coffein mittels der vorbehandelten Aktivkohle adsorbiert. Vorzugsweise wird jeweils eine Charge Kaffee in einem Extrakteur mit der Prozessflüssigkeit versetzt und die wässrige Extraktlösung über ein Filter und durch eine oder mehrere Aktivkohle-Kolonnen im Kreislauf umgepumpt, bis sie coffeinfrei ist.

Vorzugsweise werden zwei oder mehr Adsorptionskolonnen eingesetzt, wobei jede Kolonne zur möglichst vollständigen Ausnutzung der Adsorptionskapazität der Aktivkohle jeweils für mehrere Chargen verwendet wird. Dabei wird für jede Charge die Extraktlösung aus dem Extrakteur zweckmässig jeweils zuerst durch eine oder mehrere schon vorher gebrauchte Adsorptionskolonnen und nachher durch eine Kolonne mit frischer vorbehandelter Aktivkohle geleitet. Hierzu kann man entweder die Kolonnen in Serie im Kreislauf anordnen oder aber einzeln zeitlich nacheinander in den Kreislauf einschalten. Am Ende der Adsorption des Coffeins aus einer Charge Kaffee wird dann jeweils die an längsten gebrauchte Kolonne gespült, entleert, neu mit Aktivkohle gefüllt und vorbehandelt.

Als Prozessflüssigkeit für das Extrahieren des grünen Kaffees kann man in einer ersten Ausführungsform eine coffeinfreie Kaffee-Extraktlösung einsetzen, deren Konzentrationen an Kaffeeinhaltsstoffen so hoch sind, dass aus den Kaffeebohnen nichts herausgelöst wird ausser Coffein, indem die Konzentrationen in der Lösung mit den Konzentrationen in der Kaffeebohne im Gleichgewicht stehen. Dieses Gleichgewicht bleibt auch erhalten, da die vorbehandelte Aktivkohle aus der Lösung praktisch nur Coffein adsorbiert. Die so behandelten Bohnen müssen anschliessend nur noch getrocknet werden.

In anderen Ausführungsformen wird als Prozessflüssigkeit Wasser eingesetzt. Zweckmässig verwendet man dabei mindestens als Teil dieses Wassers das Spülwasser, mit dem nach der Behandlung einer vorangegangenen Charge die am längsten gebrauchte Adsorptionskolonne gespült worden ist (s. oben), da dieses Spülwasser Kaffee-Extraktreste enthält. In diesen Ausführungsformen werden natürlich aus den Kaffeebohnen auch andere Extraktstoffe als Coffein herausgelöst, die nach der Adsorption des Coffeins wieder mit den Bohnen vereinigt werden müssen. Zu diesem Zweck werden anschliessend an die Adsorption die Bohnen von der Extraktlösung getrennt und mit Heissluft oder unter Vacuum auf einen Feuchtigkeitsgehalt zwischen 10 und 40 % getrocknet. Die Extraktlösung wird in einem Destillateur unter Vacuum eingeengt, bis das Verhältnis eingefülltes Kaffeegewicht (kg) zu konzentrierter Extraktlösung (Liter) einen Wert zwischen 5 : 1 und 5 : 4 erreicht hat, und die konzentrierte Extraktlösung wird dann, beispielsweise bei 40-100°C, vorzugsweise 60-80°C, mit den getrockneten Bohnen zusammengegeben und von diesen aufgenommen. Anschliessend werden die Bohnen wieder auf den gewünschten Wassergehalt getrocknet.

Geeignete Bedingungen für die beschriebene Extraktion und Adsorption des Coffeins sind die folgenden:
Durchflussgeschwindigkeit der Prozessflüssigkeit im Kreislauf durch Extrakteur und Adsorptionskolonne(n): 5-25 m³/h;
Temperatur: 40-100°C, vorzugeweise 70- 90°C;
Dauer: 6-12 h
Verhältnis Prozessflüssigkeitsmenge (Wassermenge) zu Kaffeemenge: 1 : 1 bis 5 : 1.

Das ebenfalls beschriebene Spülen der am meisten gesättigten Adsorptionskolonne nach jeder Adsorption zur Extraktrückgewinnung kann wie folgt geschehen: Spülen, gegebenenfalls wiederholt, mit Wasser, eventuell unter Zusatz von Säuren der auch für die Vorbehandlung der Aktivkohle verwendeten Art. Als Spülwasser wird zweckmässig Kondensat von der beschriebenen Destillation und Frischwasser verwendet. Vorzugsweise wird das Spülwasser aus einem beheizten Spültank im Kreislauf durch die ausser Betrieb genommene Aktivkohlekolonne gepumpt. Spültemperatur: 50-100°C; Durchfluss; 5-25 m³/h; Dauer: ½-2 h. Das Spülwasser wird nachher wie schon beschrieben als Prozessflüssigkeit für eine nächste Charge verwendet.

In der beschriebenen Weise wird ein einwandfrei röstbarer coffeinfreier Rohkaffee von heller Farbe und mit guter Tassenqualität erhalten, mit einem Extraktgehalt von über 22 % und einem Coffeingehalt von weniger als 0,1 % (nach dem Rösten), wie es die gesetzlichen Vorschriften verlangen.

### Beispiel

In einen Vorbehandlungstank von 2500 Liter Inhalt werden 2000 Liter Wasser, 50 kg Rohrzucker und 10 kg Ameisensäure 99/100 % gegeben und auf 80°C aufgeheizt. Diese Lösung wird 10 Stunden lang im Kreislauf durch eine Aktivkohlekolonne mit 500 kg Aktivkohle gefahren, mit einem Durchsatz von 10 m³/h. Danach wird die Lösung vollständig in den Vorbehandlungstank zurückgepumpt. Die Aktivkohle wird mit 1000 Liter kaltem Frischwasser nachgespült.

In einen Extrakteur von ca. 9000 Liter Inhalt werden 2500 kg Rohkaffee und 7000 Liter Prozesswasser gegeben. Via Pumpe und Filter wird die Flüssigkeit bzw. Extraktlösung bei 70°C mit 15 m³/h im Kreislauf durch die vorbehandelte Aktivkohlekolonne gepumpt. Nach 8 Stunden ist die Extraktlösung praktisch coffeinfrei. Nun wird die gesamte wässrige Extraktlösung in einen Destillateur gebracht und unter Vacuum aufkonzentriert auf 1000 Liter. Die Bohnen werden mit Heissluft auf 30 % Feuchtigkeit getrocknet. Anschliessend werden die konzentrierte Extraktlösung und die getrockneten Bohnen im Extrakteur wieder zusammengegeben. Die Bohnen nehmen die gasamte Extraktlösung bei 75°C innerhalb von 3 Stunden vollständig auf. Am Ende werden die Bohnen mit Heissluft auf einen Feuchtigkeitsgehalt von 10 % getrocknet.

Der Extraktgehalt und der Coffeingehalt des unbehandelten Rohkaffees und des behandelten coffeinfreien Rohkaffees wurden jeweils nach einer Röstung gemessen, und zwar gemäss den Vorschriften des schweizerischen Lebensmittelgesetzes. Der unbehandelte Kaffee enthielt nach dem Rösten 28 % Extrkakt und 1,3 % Coffein. Der gleiche Kaffee, doch in der beschriebenen Weise behandelt, enthielt nach dem Rösten 23,5 % Extrakt und 0,04 % Coffein.

Die ausser Betrieb genommene Kolonne wird dreimal mit je 2000 Liter Kondensat der Destillation oder Frischwasser, unter Zusatz von jeweils 2-4 kg Ameisensäure 99/100 %, bei 90°C jeweils 90 Minuten lang gespült, und zwar mittels eines Kreislaufes Spültank- Kolonne-Spültank. Das Spülwasser wird gesammelt und für eine folgende Charge als Prozesswasser verwendet.

### Patentansprüche

1. Verfahren zum Entcoffeinieren von Rohkaffee, wobei das Coffein mittels einer wäßrigen Flüssigkeit extrahiert und aus der Flüssigkeit an einem Adsorptionsmittel adsorbiert wird, dadurch gekennzeichnet, daß das Adsorptionsmittel mit mindestens einem wasserlöslichen Rohkaffee-Inhaltsstoff, der nicht aus der Flüssigkeit heraus an das Adsorptionsmittel gebunden werden soll, oder einem Stoff gleicher Molekülstruktur und größe vorbeladen und der Beladungsgrad so eingestellt wird, daß zwischen Flüssigkeit und Adsorptionsmittel bezüglich des genannten Rohkaffee-Inhaltsstoffes bzw. der genannten Rohkaffee-Inhaltsstoffe mit Ausnahme des Coffeins Adsorptionsgleichgewicht herrscht und daß danach so gewonnener entcoffeinierter Extrakt eingeengt und wieder mit dem inzwischen getrockneten Rohkaffee vereinigt wird oder daß als wässrige Flüssigkeit entcoffeinierter Extrakt zum Extrahieren des Coffeins aus dem Rohkaffee verwendet wird, wobei in diesem Fall in dem coffeinfreien Extrakt die Konzentration an wasserlöslichen Rohkaffee-Inhaltsstoffen so hoch ist, daß aus dem Rohkaffee außer dem Coffein praktisch keine anderen wasserlöslichen Rohkaffee-Inhaltsstoffe herausgelöst werden.

2. Verfahren nach Patentanspruch 1, dadurch gekennzeichnet, daß das Adsorptionsmittel mit mindestens einem Kohlenhydrat beladen wird.

3. Verfahren nach Patentanspruch 2, dadurch gekennzeichnet, daß das Adsorptionsmittel mit Saccharose und/oder Glucosebeladen wird.

4. Verfahren nach einem der Patentansprüche 1 bis 3, dadurch gekennzeichnet, daß das Adsorptionsmittel vor dem Adsorbieren des Coffeins mit Säure behandelt und danach mit Wasser gespült wird.

5. Verfahren nach Patentanspruch 4, dadurch gekennzeichnet, daß als Säure mindestens eine von Natur aus im Kaffee enthaltene Säure eingesetzt wird.

6. Verfahren nach Patentanspruch 4, dadurch gekennzeichnet, daß als Säure Essigsäure und/oder Ameisensäure und/oder Salzsäure eingesetzt wird.

7. Verfahren nach einem der Patentansprüche 1 bis 6, dadurch gekennzeichnet, daß zum Beladen des Adsorptionsmittels mit einer wässrigen Lösung des Beladestoffs bzw. der Beladestoffe in Berührung gebracht wird.

8. Verfahren nach einem der Patentansprüche 1 bis 7, dadurch gekennzeichnet, daß zum Extrahieren und Adsorbieren des Coffeins die wässrige Flüssigkeit im Kreislauf durch einen eine Charge des Rohkaffees enthaltenden Extrakteur und mindestens eine das vorbeladene Adsorptionsmittel enthaltende Kolonne gefördert wird.

9. Verfahren nach Patentanspruch 8, dadurch gekennzeichnet, daß zwei oder mehr Adsorptionskolonnen jeweils wiederholt in der Weise eingesetzt werden, daß die vom Extrakteur kommende Flüssigkeit zuerst durch mindestens eine Kolonne mit schon zum Adsorbieren von Coffein verwendetem Adsorptionsmittel und nachher durch eine Kolonne mit frischem beladenem Adsorptionsmittel strömt.

10. Verfahren nach Patentanspruch 8 oder 9, dadurch gekennzeichnet, daß die bzw. jede Adsorptionskolonne nach der Verwendung, wenn sie nicht mehr zum Adsorbieren von Coffein verwendet werden soll, mit Wasser gespült wird und das Extraktreste enthaltende Spülwasser nachher als Teil der wässrigen Flüssigkeit zum Extrahieren einer nächsten Charge des Rohkaffees verwendet wird.

## Claims

1. Method for decaffeinating raw coffee, in which the caffeine is extracted by means of an aqueous liquid and is adsorbed on an adsorption agent from the liquid, characterised in that the adsorption agent is pre-loaded with at least one water-soluble raw coffee constituent, which is not to be bound on the adsorption agent out of the liquid, or with a substance having the same molecular structure and weight and the degree of loading is adjusted so that an adsorption equilibrium exists bstween the liquid and the adsorption agent in respect of the said raw coffee constituent or of the said raw coffee constituents, with the exception of caffeine and that then the de-caffeinated extract obtained in this way is concentrated and once more combined with the raw coffee which has been dried in the meantime or that de-caffeinated extract is used as the aqueous liquid for extracting the caffeine from the raw coffee, whereby in this case the concentration of water-soluble raw coffee constituents in the caffeine-free extract is so high that apart from the caffeine, virtually no other water-soluble raw coffee constituents are dissolved out of the raw coffee.

2. Method according to Patent Claim 1, characterised in that the adsorption agent is loaded with at least one carbohydrate.

3. Method according to Patent Claim 2, characterised in that the adsorption agent is loaded with saccharose and/or glucose.

4. Method according to one of Patent Claims 1 to 3, characterised in that before the adsorption of the caffeine, the adsorption agent is treated with acid and then rinsed with water.

5. Method according to Patent Claim 4, characterised in that at least one acid naturally contained in coffee is used as the acid.

6. Method according to Patent Claim 4, characterised in that acetic acid and/or formic acid and/or hydrochloric acid is used as the acid.

7. Method according to one of Patent Claims 1 to 8, characterised in that for the loading, the adsorption agent is brought into contact with an aqueous solution of the loading substance or substances.

8. Method according to one of Patent Claims 1 to 7, characterised in that for the extracting and adsorbing of the caffeine, the aqueous liquid is recirculated through an extractor containing a batch of raw coffee and through at least one column containing the preloaded adsorption agent.

9. Method according to Patent Claim 8, characterised in that two or more adsorption columns are repeatedly used in a way such that the liquid coming from the extractor first of all flows through at least one column with adsorption agent which has been previously used for adsorbing caffeine and afterwards through a column with fresh loaded adsorption agent.

10. Method according to Patent Claim 8 or 9, characterised in that when it is no longer to be used for adsorbing caffeine, the or each adsorption column is rinsed with water after use and the rinse water containing extract residues is used afterwards as part of the aqueous liquid for extracting the next batch of raw coffee.

## Revendications

1. Procédé pour décaféiner le café vert, dans lequel on extrait la caféine au moyen d'un liquide aqueux et on la sépare de celui-ci par adsorption sur un agent approprié, caractérisé en ce qu'on charge préalablement l'agent d'adsorption avec au moins une substance aquasoluble contenue dans le café vert qui ne doit pas être extraite du liquide, ni liée à l'agent d'adsorption, ou avec une substance ayant la même structure et grandeur moléculaire, en réglant le degré de chargement de manière que, sauf en ce qui concerne la caféine, il s'établisse entre ledit liquide et ledit agent d'adsorption, par rapport à la substance en question contenue dans le café vert, à l'exception de la caféine, un équilibre d'adsorption, et en ce que, après cela, on concentre l'extrait décaféiné ainsi obtenu et on le réunit ensuite avec le café vert séché entre temps ou bien on utilise cet extrait décaféiné, sous forme de solution aqueuse, pour l'extraction de la caféine du café vert, auquel cas, dans l'extrait décaféine, la concentration de substances aquasolubles présentes dans le café vert est si élevée que pratiquement aucune des autres substances aquasolubles présentes dans ce café vert n'est extraite.

2. Procédé selon la revendication 1, caractérisé en ce qu'on charge l'agent d'adsorption avec, au moins, un hydrate de carbone.

3. Procédé selon la revendication 2, caractérisé en ce qu'on charge l'agemt d'adsorption avec de la saccharose et/ou du glucose.

4. Procédé selon l'une quelconque des revendications 1 à 3, caractérisé en ce qu'on traite l'agent d'adsorption, avant d'adsorber la caféine, avec un acide, puis on le rince à l'eau.

5. Procédé selon la revendication 4, caractérisé en ce qu'on utilise comme acide, un acide naturellement contenu dans le café.

6. Procédé selon la revendication 4, caractérisé en ce qu'on utilise comme acide, l'acide acétique et/ou l'acide formique.

7. Procédé selon l'une quelconque des revendications 1 à 6, caractérisé en ce que pour charger l'agent d'adsorption, on le met en contact avec une solution aqueuse de la ou des substances de chargement.

8. Procédé selon l'une quelconque des revendications 1 à 7, caractérisé en ce que, pour extraire et adsorber la caféine, on fait circuler le liquide aqueux en circuit fermé dans un extracteur contenant une charge de café vert et dans, au moins, une colonne contenant l'agent d'adsorption préchargé.

9. Procédé selon la revendication 8, caractérisé en ce qu'on utilise deux ou plusieurs colonnes d'adsorption à répétition de manière que l'effluent de l'extracteur traverse d'abord, au moins, une colonne contenant de l'agent d'adsorption ayant déjà servi, puis une colonne chargée avec de l'agent d'adsorption frais.

10. Procédé selon la revendication 8 ou 9, caractérisé en ce que, après l'utilisation, on rince avec de l'eau la ou chaque colonne d'adsorption qui ne doit plus servir à adsorber de la caféine, et on réutilise l'eau de rinçage, qui contient des restes d'extrait, comme composant du liquide aqueux servant pour le traitement d'extraction de la charge suivante de café vert.